# EUROPÄISCHE PATENTSCHRIFT

(11) **EP 0 719 963 B1**
(45) Veröffentlichungstag und Bekanntmachung des Hinweises auf die Patenterteilung: **15.03.2000**
(21) Anmeldenummer: 95120223.3
(22) Anmeldetag: 20.12.1995
(51) Int. Cl.: F16H 7/24

(54) **Vorrichtung zum Wechseln eines endlosen Zugmittels**
Apparatus for replacing endless belts
Dispositif pour échanger des courroies sans fin

(30) Priorität: 30.12.1994 DE 4447202
(43) Veröffentlichungstag der Anmeldung: 03.07.1996
(73) Patentinhaber: Koenig & Bauer Aktiengesellschaft, 97080 Würzburg (DE)
(72) Erfinder: Hillebrand, Bernd A., D-97493 Bergrheinfeld (DE)

(56) Entgegenhaltungen:
- US-A- 2 678 565

## Beschreibung

Die Erfindung betrifft eine Vorrichtung zum "Auffädeln" eines endlosen Zugmittels entsprechend dem Oberbegriff des Anspruches 1 (US 2 678 565 A).

Es ist bekannt, ein zwischen zwei Lagerstellen einer Antriebswelle angeordnetes endloses Zugmittel, z. B. einen Zahnriemen dadurch zu Wechseln, daß eine komplette Lagerung an einem Ende der Antriebswelle ausgebaut wird und anschließend das endlose Zugmittel ab- bzw. aufgelegt wird.

Nachteilig dabei ist, daß dieses nur mit hohem Zeitaufwand möglich ist.

Die US 26 78 565 A offenbart eine Vorrichtung zum Auffädeln eines endlosen Riemens auf ein Rad. Dabei sind in einem Gestell und einem Rad jeweils eine Ausnehmung vorgesehen, so daß beide Ausnehmungen eine gemeinsame Öffnung bilden können.

Der Erfindung liegt die Aufgabe zugrunde, eine Vorrichtung zum "Auffädeln" bzw. "Abfädeln" eines flexiblen endlosen Zugmittels auf einen stabförmigen Körper zu schaffen.

Diese Aufgabe wird erfindungsgemäß durch die Merkmale des kennzeichnenden Teils des Anspruches 1 gelöst.

Die mit der Erfindung erzielbaren Vorteile bestehen insbesondere darin, daß der Wechsel eines endlosen flexiblen Zugmittels, wie z. B. eines Keilriemens, eines Zahnriemens, eines Seiles oder eines Transportbandes mit der erfindungsgemäßen Vorrichtung ohne den Ausbau irgendeines Teiles erfolgen kann. Der vom endlosen Zugmittel umschlungene stabförmige Körper, z. B. ein Wellenzapfen oder Zahnriemenrad usw. kann dabei in dem Gestell der Maschine gelagert sein. Die genannten stabförmigen Körper können aber auch in einem so geringen Abstand zum Gestell angeordnet sein, daß das Zugmittel nicht durch diesen Abstand hindurchgeführt werden kann.
Der Wechsel des endlosen Zugmittels kann schnell, ohne Spezialwerkzeuge und ohne größere Maschinenstillstandszeit erfolgen. Darüberhinaus können mit der erfindungsgemäßen Vorrichtung auch alle endlosen flexiblen Zugmittel, wie z. B. Zahnriemen, Ketten, Flachriemen usw. um Achsen, Antriebswellen, Spindeln, Traversen, Träger und dgl. gelegt werden.

Ein Ausführungsbeispiel der Erfindung ist in der Zeichnung dargestellt und wird im folgenden näher beschrieben.

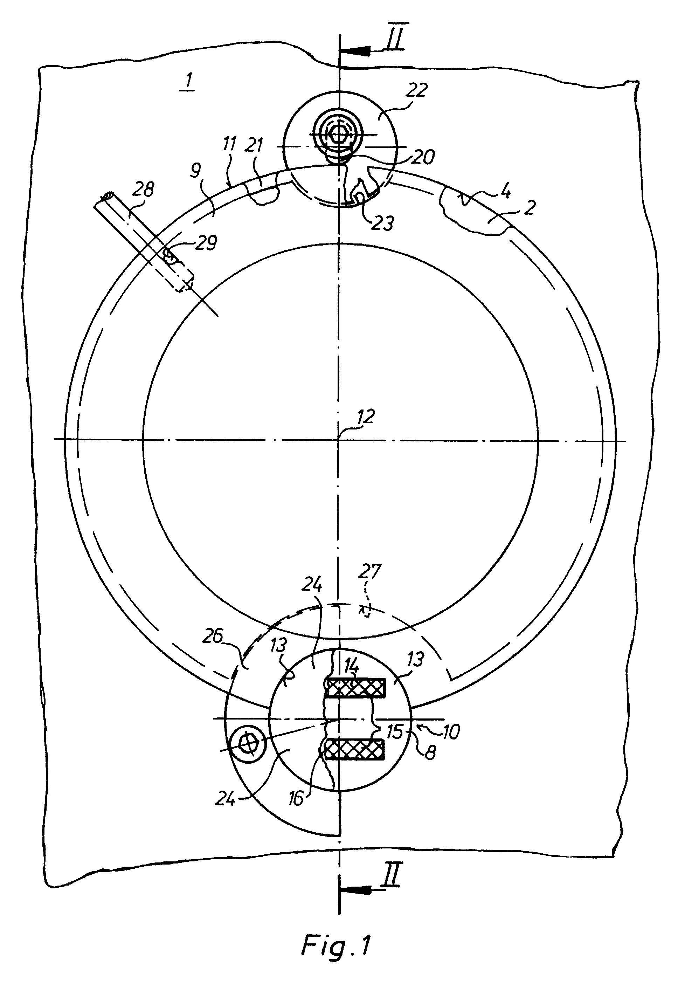

Es zeigen
- Fig. 1: die Vorderansicht einer erfindungsgemäßen Vorrichtung,

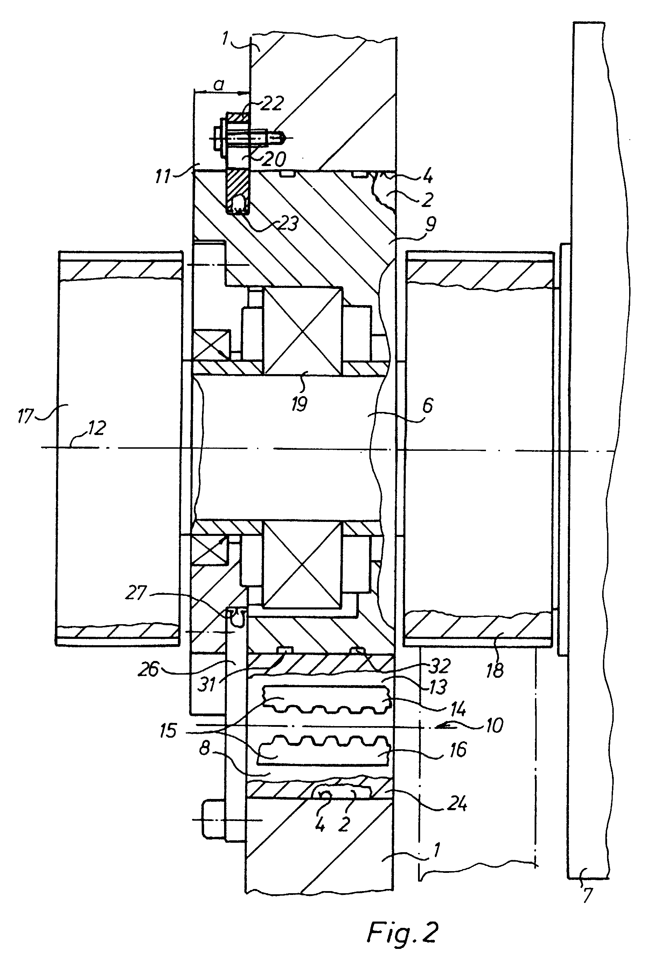

- Fig. 2: einen Schnitt II - II durch die Vorrichtung nach Fig. 1.

Ein Gestell 1 weist eine Bohrung 2 auf. Die Bohrung 2 wiederum weist an ihrem Umfang 4 eine im Gestell 1 in achsparalleler Richtung zu einem stabförmigen Körper, z. B. einem Wellenzapfen 6 eines Zylinders 7, z. B. eines Falzapparates einer Rotationsdruckmaschine verlaufende durchgehende außenliegende Ausnehmung 8 auf.

Innerhalb der Bohrung 2 ist eine ringförmige Scheibe, z. B. in Form einer Lagerbuchse 9 zur Aufnahme des Wellenzapfens 6 angeordnet. Sie hat an ihrem Umfang 11 eine, sich in achsparalleler Richtung zum Wellenzapfen 6 erstreckende, durchgehende innenliegende Ausnehmung 13. Die Scheibe, bzw. die Lagerbuchse 9 kann zur Bohrung 2 so verdreht werden, daß beide Ausnehmungen 8; 13 übereinanderliegen und so ein gemeinsamer Einführkanal oder eine Öffnung 10 entsteht. Jede Ausnehmung 8; 13 ist in ihrem Querschnitt so bemessen, daß sie jeweils einem Trum 14; 16 eines endlosen Zugmittels 15, z. B. einem Zahnriemen 15 für ein Zugmittelgetriebe angepaßt ist.

Der Wellenzapfen 6 kann auf beiden Seiten des Gestells 1 mit je einer Zahnriemenscheibe 17; 18 versehen sein, wobei sich die Zahnriemenscheibe 18, auf die das Zugmittel 15 "aufzufädeln" ist, zwischen dem Gestell 1 und dem Zylinder 7 befindet.

Das "Auffädeln" und "Abfädeln" des endlosen, aus erstem Trum 14 und aus zweiten Trum 16 bestehenden Zugmittels 15 wird anhand eines Zahnriemens 15 beschrieben: Der endlose Zahnriemen 15 wird mit seinem zu einer Schlaufe geformten ersten Ende durch die miteinander zu einem Einführkanal 10 in Deckung gebrachten Ausnehmungen 8; 13 etwa mittig in Richtung Zahnriemenscheibe 18, d. h. in Richtung unzugänglicher Seite des Gestells 1 gesteckt. Das erste Trum 14 kommt in der Ausnehmung 13 der Lagerbuchse 9 und das zweite Trum 16 in der Ausnehmung 8 der Bohrung 2 zu liegen. Durch Drehen der Scheibe bzw. der den Wellenzapfen 6 aufnehmenden Lagerbuchse 9 um 360° wird das erste Trum 14 der Schlaufe mitgenommen und um den Wellenzapfen 6 bzw. die Zahnriemenscheibe 18 gelegt. Nach Beenden der Drehung der Lagerbuchse 9 um 360° kann das zweite Ende der Schlaufe des Zahnriemens 15 durch die nunmehr wieder einen gemeinsamen Einführkanal 10 bildenden Ausnehmungen 8; 13 gezogen werden. Jetzt umschlingt der Zahnriemen 15 den Wellenzapfen 6 bzw. die zwischen Gestell 1 und dem Zylinder 7 befindliche Zahnriemenscheibe 18.

Ein "Abfädeln" eines Zahnriemens 15 oder eines anderen Zugmittels erfolgt in umgekehrter Reihenfolge.

Zweckmäßigerweise weist die Lagerbuchse 9 ein Kugellager 19 auf zur Lagerung des Wellenzapfens 6.

Die Ausnehmungen 8; 13 weisen vorzugsweise jeweils einen halbkreisförmigen Querschnitt mit annähernd gleichem Flächeninhalt auf. Der Querschnitt einer jeden Ausnehmung 8; 13 kann jedoch auch U-förmig ausgebildet sein. Auch ist es möglich, jede Ausnehmung 8; 13 im Querschnitt schwalbenschwanzförmig auszuführen. Weitere Querschnittsformen sind möglich.

Zweckmäßigerweise weist die Lagerbuchse 9 gegenüber der Dicke des Gestells 1 eine um einen Betrag a größere Länge, von z. B. 10 mm auf. Am Umfang 11 der Lagerbuchse 9 läuft im Bereich des Betrages a eine ringförmige Nut 21 um, in welche eine am Gestell 1 festlegbare Sicherungsscheibe 22 eingreift. Hierdurch wird während der Drehbewegung eine Führung der Lagerbuchse 9 gesichert und eine axiale Bewegung der Lagerbuchse 9 vermieden. Die Sicherungsscheibe 22 weist ein Langloch 20 auf. Dadurch ist die Sicherungsscheibe 22 in radialer Richtung der Lagerbuchse 9 bewegbar und kann in eine in der Nut 21 befindliche Vertiefung 23 eingeschoben werden. Damit ist die Lagerbuchse 9 gegen eine unbeabsichtigte Drehbewegung arretiert. Der Einsatz anderer bekannter Sicherungsmittels wie z. B. Klemmpratzen, ist möglich.

Der Einführkanal 10 kann beidseits verschließbar ausgeführt sein, z. B. mit einem Verschlußbolzen 24. Zur leichten Montage und Demontage eines derartigen Verschlußbolzens 24 sowie zum Verhindern eines unbeabsichtigten Herausfallens desselben weist dieser ein am linken Bolzenende halbseitig am Umfang und halbkreisförmig ausgebildeten Kragen 26 auf. Der Kragen 26 greift in eine in der Lagerbuchse 9 befindliche Nut 27 ein. Die Nut 27 befindet sich am Umfang 11 des aus dem Gestell 1 um den Betrag a herausstehenden Teils der Lagerbuchse 9 und ist halbkreisförmig ausgeführt, entsprechend dem Radius des am Ende des Verschlußbolzens 24 befindlichen Kragens 26. Der Verschlußbolzen 24 kann mittels einer durch eine Bohrung im Kragen 26 gehenden Schraube am Gestell 1 festgelegt und somit gegen Verdrehen gesichert sein. Im Falle der Verwendung eines Verschlußbolzens 24 übernimmt dieser gleichzeitig noch eine Sicherheitsfunktion gegen das Verdrehen der Lagerbuchse 9.

Ein Verdrehen der Lagerbuchse 9 beim "Auf-" bzw. auch "Abfädeln" eines Zahnriemens 15 kann mit einem geeigneten Werkzeug, z. B. einem lösbaren Griff 28 erfolgen, welcher in eine an der Lagerbuchse 9 befindliche Radialbohrung 29 einsteckbar ist. Das Verdrehen der Lagerbuchse 9 in der Bohrung 2 des Gestells 1 wird durch die Anordnung von am Umfang der Lagerbuchse 9 befindliche Schmiernuten 31; 32 erleichtert.

Bei einer anderen Ausgestaltung der Erfindung ist vorgesehen, daß die Bohrung 2 des Gestells 1 selbst als ein in einer Bohrung 2 befindlicher zusätzlicher Ring ausgebildet ist. Dieser Ring trägt dann an seiner Innenseite die Ausnehmung 8. Dies hat den Vorteil, daß sowohl die Scheibe 9 als auch die Bohrung 2 zueinander verdrehbar angeordnet ist (Relativbewegung).

Unter bestimmten Voraussetzungen kann es von Vorteil sein, wenn im Gestell 1 zwischen der Bohrung 2 und der Lagerbuchse 9 eine nicht dargestellte exzentrische Buchse angeordnet ist, um den Zylinder 7 über den in der Lagerbuchse 9 befindlichen Wellenzapfen 6 anzustellen. Statt einer Lagerbuchse 9 kann natürlich auch ein nicht dargestelltes Kugellager zur Aufnahme des Wellenzapfens 6 dienen, wobei dann der Außenring des Kugellagers die Ausnehmung 13 trägt.

### Teileliste

- 1: Gestell
- 2: Bohrung (1)
- 3: -
- 4: Umfang (2)
- 5: -
- 6: Wellenzapfen
- 7: Zylinder
- 8: Ausnehmung (2)
- 9: Lagerbuchse, Scheibe (6)
- 10: Öffnung (8; 13)
- 11: Umfang (9)
- 12: Rotationsachse
- 13: Ausnehmung (9)
- 14: Trum (15)
- 15: Zugmittel, endlos
- 16: Trum (15)
- 17: Zahnriemenscheibe
- 18: Zahnriemenscheibe
- 19: Kugellager
- 20: Langloch
- 21: Nut (a)
- 22: Sicherungsscheibe
- 23: Vertiefung
- 24: Verschlußbolzen (10)
- 25: -
- 26: Kragen
- 27: Nut (9)
- 28: Griff
- 29: Radialbohrung
- 30: -
- 31: Schmiernut (9)
- 32: Schmiernut (9)

- a: Betrag (9)

## Patentansprüche

1. Vorrichtung zum Auffädeln eines flexiblen endlosen Zugmittels (15) auf ein Rad, einen Wellenzapfen oder dergleichen, wobei in einem Gestell (1) eine Bohrung (2) vorgesehen ist, an deren Rand eine erste Ausnehmung (8) verläuft, daß innerhalb der Bohrung (2) eine Scheibe (9) drehbar gelagert ist, an deren Außenkontur (11) sich eine zweite Ausnehmung (13) erstreckt, so daß die beiden Ausnehmungen (8; 13) eine gemeinsame öffnung (10) bilden können, in die das Zugmittel (15) in Form einer flachen Endlosschlaufe von einer Seite eingeführt wird, wobei deren einer Abschnitt (16) in der gestellfesten Ausnehmung (8) festgehalten wird, während der andere Abschnitt (14) in der Ausnehmung (13) der Scheibe (9) gelegen, durch deren Verdrehen um 360° sowie mitgenommen wird und wobei um das Rad, den Wellenzapfen (6) oder dergleichen herumgeführt wird, um damit in Auflage gebracht zu werden, dadurch gekennzeichnet, daß ein am Gestell (1) festlegbares, mit der Scheibe (9) zusammenwirkendes Sicherungsmittel (22; 24) gegen das Verdrehen der Scheibe (9) angeordnet ist.

2. Vorrichtung nach Anspruch 1, dadurch gekennzeichnet, daß das Sicherungsmittel (24) als Verschlußbolzen (24) ausgebildet ist und daß die gemeinsame öffnung (10) mittels des Verschlußbolzens (24) verschließbar ist.

3. Vorrichtung nach Anspruch 1, dadurch gekennzeichnet, daß die Scheibe (9) mit einem überstand (a) versehen ist und eine umlaufende Nut (21) aufweist, in die eine exzentrisch gelagerte Sicherungsscheibe (22) eingreift und in eine in der Nut (21) befindliche Vertiefung (23) einschiebbar angeordnet ist.

4. Vorrichtung nach Anspruch 1, dadurch gekennzeichnet, daß die Scheibe (9) als Lagerbuchse ausgebildet ist.

5. Vorrichtung nach Anspruch 1, dadurch gekennzeichnet, daß die Scheibe (9) als Außenring eines Kugellagers ausgebildet ist.

## Claims

1. Apparatus for threading a flexible endless traction means (15) onto a wheel, a shaft journal or the like, there being provided in a frame (1) a hole (2) at the edge of which there extends a first aperture (8), in that, rotatably mounted within the hole (2), there is a disc (9) on the outer contour (11) of which there extends a second aperture (13), with the result that the two apertures (8; 13) can form a common opening (10) into which the traction means (15) can be inserted from one side in the form of a flat endless loop, one section (16) of which is held fast in the aperture (8) fixed in relation to the frame, while the other section (14), which is placed in the aperture (13) in the disc (9), is taken along by the rotation of the latter through 360° and in which [sic] guided around the wheel, the shaft journal (6) or the like so as to be brought into contact with the latter, characterized in that a retaining means (22; 24) is provided which can be fixed on the frame (1), interacts with the disc (9) and prevents the rotation of the disc (9) .

2. Apparatus according to Claim 1, characterized in that the retaining means (24) is designed as a plug (24) and in that the common opening (10) can be closed by means of the plug (24).

3. Apparatus according to Claim 1, characterized in that the disc (9) is provided with a projecting length (a) and has an encircling groove (21) into which an eccentrically mounted retaining washer (22) engages and is arranged in such a way that it can be pushed into a depression (23) situated in the groove (21).

4. Apparatus according to Claim 1, characterized in that the disc (9) is designed as a bearing bush.

5. Apparatus according to Claim 1, characterized in that the disc (9) is designed as the outer race of a ball bearing.

## Revendications

1. Dispositif pour enfiler un moyen de traction (15) continu flexible sur une roue, un tourillon d'arbre ou analogue, dans un bâti (1) étant prévu un perçage (2), sur le bord duquel s'étend un premier évidement (8), en ce qu'à l'intérieur du perçage (2) est monté à rotation un disque (9) sur le contour extérieur (11) duquel s'étend un deuxième évidement (13), si bien que les deux évidements (8; 13) peuvent constituer une ouverture commune (10), dans laquelle le moyen de traction (15), se présentant sous la forme d'une boucle continue, est introduit depuis un côté, boucle dont un tronçon (16) est fixé dans l'évidement (8) fixe par rapport au bâti, tandis que l'autre tronçon (14) est placé dans l'évidement (13) du disque (9), grâce à la rotation de celui-ci est tourné de 360 degrés et entraîné, et est passé autour de la roue, du tourillon d'arbre (6) ou analogue, afin d'être ainsi placé en appui, caractérisé en ce qu'un moyen de sécurité (22; 24) susceptible d'être fixé sur le bâti (1), coopérant avec le disque (9), est disposé pour empêcher toute rotation du disque (9).

2. Dispositif selon la revendication 1, caractérisé en ce que le moyen de sécurité (24) est réalisé sous la forme de boulon de fermeture (24) et en ce que l'ouverture commune (10) est susceptible d'être obturée au moyen du boulon de fermeture (24).

3. Dispositif selon la revendication 1, caractérisé en ce que le disque (9) est doté d'un dépassement (a) et d'une gorge de pourtour (21), dans laquelle s'engage un disque ou rondelle de sécurité (22) monté(e) de façon excentrée et disposé(e) de façon à être susceptible d'être inséré(e) dans un creusement (23) ménagé dans la gorge (21).

4. Dispositif selon la revendication 1, caractérisé en ce que le disque (9) est réalisé sous la forme de deux coussinets de palier.

5. Dispositif selon la revendication 1, caractérisé en ce que le disque (9) est réalisé sous la forme de bague extérieure d'un roulement à billes.
